(19) Europäisches Patentamt
European Patent Office
Office européen des brevets

(11) **EP 1 972 906 B1**

(12) **EUROPÄISCHE PATENTSCHRIFT**

(45) Veröffentlichungstag und Bekanntmachung des Hinweises auf die Patenterteilung:
**09.06.2010 Patentblatt 2010/23**

(51) Int Cl.:
***G01F 25/00*** *(2006.01)*

(21) Anmeldenummer: **08004774.9**

(22) Anmeldetag: **14.03.2008**

(54) **Verfahren zur Fehlererkennung eines Strömungssensors**

Method for recognising errors in a flow sensor

Procédé destiné à la détection d'erreurs d'un capteur d'écoulement

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.03.2007 DE 102007013079**
**06.08.2007 AT 12272007**

(43) Veröffentlichungstag der Anmeldung:
**24.09.2008 Patentblatt 2008/39**

(73) Patentinhaber: **Vaillant GmbH**
**42859 Remscheid (DE)**

(72) Erfinder: **Tomczak, Heinz-Jörg**
**42549 Velbert (DE)**

(74) Vertreter: **Hocker, Thomas**
**Vaillant GmbH**
**Berghauser Strasse 40**
**42859 Remscheid (DE)**

(56) Entgegenhaltungen:
**WO-A-2005/089432        DE-A1-102005 025 884**
**US-A1- 2004 098 210**

EP 1 972 906 B1

**Beschreibung**

Die Erfindung bezieht sich auf ein Verfahren zur Fehlererkennung eines Strömungssensors, beispielsweise durch Verschmutzung.

Bei einer üblichen Bauform von Massenstromsensoren befindet sich zwischen zwei Temperatursensoren ein elektrisches Heizelement. Ohne Fluidmassenstrom erwärmt das Heizelement die beiden Temperatursensoren, so dass diese wärmer als das ruhende Fluid sind. Die elektrische Heizleistung wird bei Fluidmassenstrom auf das strömende Medium übertragen, so dass sich bei dem in Strömungsrichtung liegenden zweiten Temperatursensor eine höhere Temperatur einstellt. Es gilt:

$$\dot{Q} = \dot{m} \cdot c_p \cdot \Delta T = U \cdot I$$

mit

$\dot{Q}$ Wärmeeintrag über ein Heizelement
$\dot{m}$ Massenstrom des zu messenden Fluids
$c_p$ spezifische Wärmekapazität des Fluids
$\Delta T$ Temperaturdifferenz zwischen den Temperatur-Messstellen
U Spannung des Heizelements
I Strom des Heizelements

Hieraus lässt sich der Massenstrom berechnen.

Durch chemische Reaktionen und Verschmutzungen kann es zu Veränderungen des Sensorelementes kommen, welche eine Veränderung des Sensorsignals zur Folge haben. So kann sowohl die Wärmeleitung vom Heizer auf die beiden Temperatursensoren verbessert oder verschlechtert werden.

Das Sensorsignal muss in regelmäßigen Abständen auf Plausibilität geprüft werden, um eine eventuelle Sensordrift zu erkennen. Da sich im laufenden Betrieb in der Regel definierte Massenströme des Mediums nicht oder nur unter großem Aufwand vorgeben lassen, ist ein Sensor-Check auf Plausibilität des Signals nicht ohne weiteres möglich.

Aus der EP 1207347 ist ein Strömungssensor bekannt, bei dem zur Plausibilitätsprüfung das Heizelement stromlos geschaltet wird und der Sensor keiner Strömung ausgesetzt wird. Die beiden Temperaturelemente können in diesem Zustand geprüft werden.

Hierdurch ist es nicht möglich, eine Drift der Temperatursensoren und/oder des Heizers über einen weiten Arbeitsbereich festzustellen. Eine Möglichkeit zur Detektierung einer Verschmutzung, die auf alle drei Bauteile des Chips wirkt, ist in DE 10129300 A1 beschrieben.

Der Erfindung liegt daher die Aufgabe zugrunde, Fehler von Massenstromsensoren mit einem Heizer und zwei Temperatursensoren im normalen Sensorbetrieb zu erkennen.

Diese Aufgabe wird gemäß den Merkmalen des unabhängigen Anspruchs dadurch gelöst, dass unter Referenzbedingungen der Sensor unterschiedlichen Massenströmen ausgesetzt wird und hierbei die Temperaturen der beiden Temperatursensoren erfasst werden. Aus diesen Temperaturen wird rechnerisch der Massenstrom sowie der Quotient der beiden Temperaturen bestimmt. Diese Werte werden als Referenzwerte gespeichert. Im normalen Sensoreinsatz wird aus dem Messwert der beiden Temperaturen ein Massenstrom und der Quotient der beiden Temperaturen errechnet. Anschließend werden diese Werte mit den Referenzwerten verglichen. Weicht der aktuelle Quotient für einen bestimmten, errechneten Massenstrom vom Referenzquotienten aus dem Speicher für denselben Massenstrom wesentlich ab, so liegt ein Fehler vor; ein Fehlersignal wird ausgegeben.

Vorteilhafte Ausgestaltungen ergeben sich gemäß den Merkmalen der abhängigen Ansprüche.

Die Erfindung wird nun anhand der Figuren detailliert erläutert. Hierbei zeigen

Figur 1 einen Strömungssensor, an dem das erfindungsgemäße Verfahren angewendet wird,

Figur 2 die Temperatur des Fluids, die Temperaturen der beiden Temperatursensoren sowie deren Quotienten über den errechneten Massenstrom,

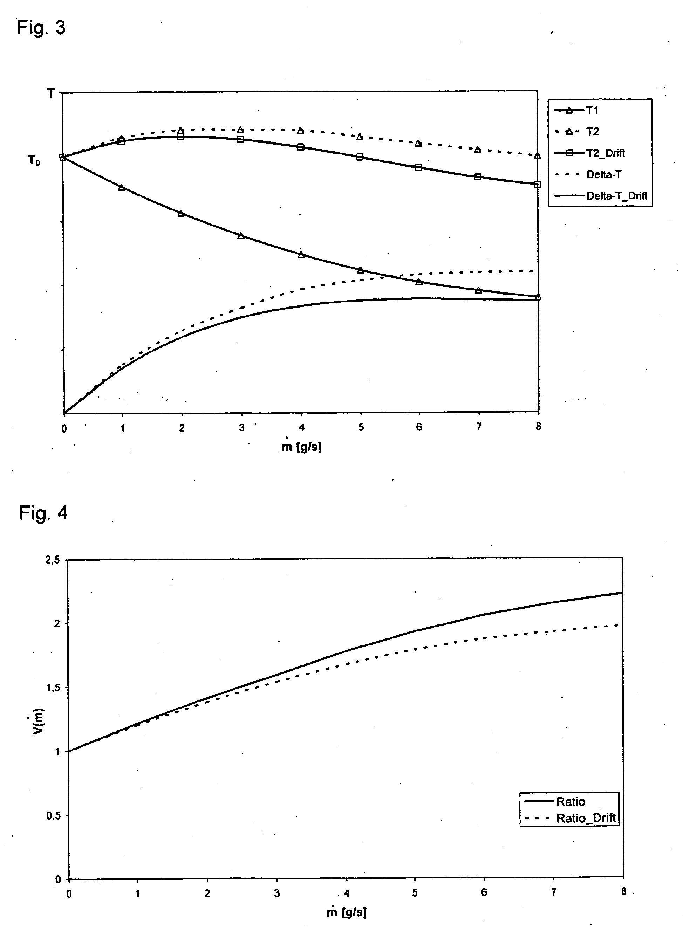

Figur 3 die Temperaturen der beiden Temperatursensoren sowie deren Differenz über den errechneten Massenstrom, wobei der Referenz- und Fehlerfall dargestellt sind, und

Figur 4 der errechnete Quotient der beiden Temperaturen über den errechneten Massenstrom, wobei der Referenz- und Fehlerfall dargestellt sind.

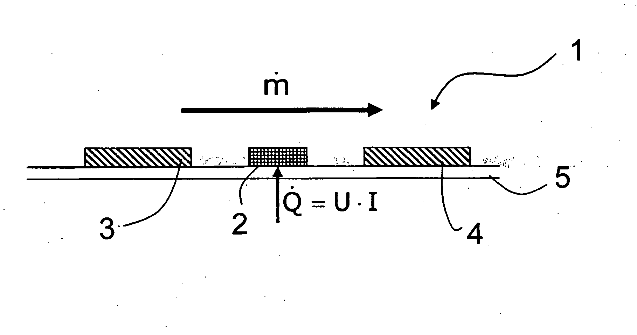

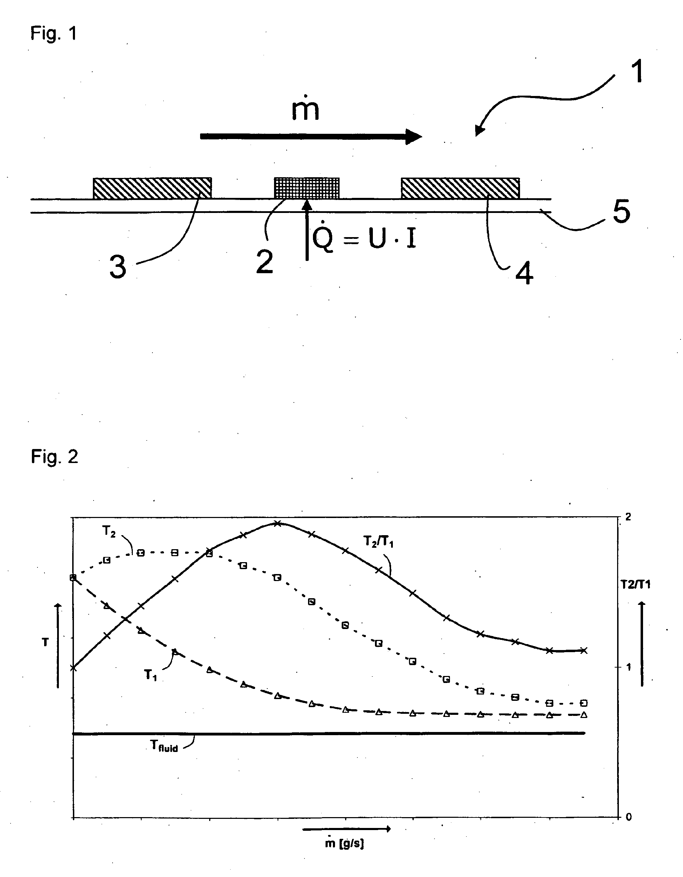

Ein Strömungssensor 1 gemäß Figur 1 verfügt über einen elektrischen Heizer 2 zwischen zwei Temperatursensoren 3, 4, die allesamt auf einer Membran 5 in Strömungsrichtung hintereinander angeordnet sind. Der elektrische Heizer 1 bringt eine Wärmemenge $\dot{Q} = U * I$ ein. Ohne Massenstrom erhitzt der elektrische Heizer 1 via Wärmeleitung die zwei Temperatursensoren 3, 4, wodurch diese sich auf eine Temperatur höher der Umgebungstemperatur erhitzen (vgl. Figur 2). Bei symmetrischem Aufbau ist davon auszugehen, dass die beiden Temperaturen gleich hoch sind.

Wird der Strömungssensor 1 von links nach rechts von einem Massenstrom m überströmt, so gibt der in Strömungsrichtung zunächst angeströmte, erste Temperatursensor 3 Wärme an den Massenstrom $\dot{m}$ ab, wodurch die Temperatur $T_1$ des ersten Temperatursensors 3 fällt. Der Massenstrom $\dot{m}$ nimmt am Heizer die Wärme $\dot{Q}$ auf und erhitzt sich somit. Anschließend strömt der Massenstrom $\dot{m}$ am zweiten Temperatursensor 4,

welcher die Temperatur $T_2$ erfasst, vorbei. Wegen des Wärmeeintrags $Q$ ist die mittels des zweiten Temperatursensors 4 erfasste Temperatur $T_2$ höher als die mittels des ersten Temperatursensors 3 erfasste Temperatur $T_1$.

Wird der Massenstrom erhöht, so fällt die mittels des ersten Temperatursensors 3 erfasste Temperatur $T_1$ kontinuierlich und nähert sich bei großen Massenströmen der Temperatur des strömendes Fluids $T_{fluid}$ an. Ausgehend von keinem Massenstrom steigt die mittels des zweiten Temperatursensors 4 erfasste Temperatur $T_2$ zunächst aufgrund des oben genannten Grundes an. Da der Massenstrom $\dot{m}$ jedoch gleichzeitig den zweiten Temperatursensor 4 kühlt, fällt die Temperatur $T_2$ ab einem bestimmten Massenstrom. Jedoch ist für alle Massenströme (größer Null) die mittels des zweiten Temperatursensors 4 erfasste Temperatur $T_2$ höher als die mittels des ersten Temperatursensors 3 erfasste Temperatur $T_1$. Die beiden Temperaturen $T_1$, $T_2$ sind stets größer als die Temperatur $T_{fluid}$ des Fluids. Aus den beiden Temperaturen $T_1$, $T_2$ werden gemäß der Formel

$$\dot{m} = \frac{U \cdot I}{c_p \cdot \Delta T} = \frac{U \cdot I}{c_p \cdot (T_2 - T_1)}$$

der Massenstrom $\dot{m}$ und der Quotient $V(\dot{m}) = \dfrac{T_2(\dot{m})}{T_1(\dot{m})}$

ermittelt.

Unter Referenzbedingungen wird ausgehend von keiner Strömung der Massenstrom $\dot{m}$ erhöht, dabei der Massenstrom $\dot{m}$ und der Quotient $V_{ref}(\dot{m})$ errechnet und in einem Speicher abgelegt.

Im normalen Arbeitsbetrieb werden ebenfalls der Quotient $V(\dot{m})$ der mittels der beiden Temperatursensoren 3, 4 gemessenen Temperaturen $T_1(\dot{m})$, $T_2(\dot{m})$ sowie der Massenstrom m ermittelt. In dem Fall, in dem der aktuell gemessene Quotient $V(\dot{m})$ vom gespeicherten Quotienten $V_{ref}(\dot{m})$ bei gleichem Massenstrom aus der entsprechenden Referenzmessung mehr als eine vorgegebene Toleranz abweicht, wird ein Fehlersignal ausgegeben.

Die vorgegebene Toleranz kann hierbei absolut oder relativ zu mindestens einem Messwert sein.

In einer Ausgestaltung der Erfindung wird bei der Ermittlung der Referenzwerte auch die Temperatur $T_1(\dot{m})$ des in Strömungsrichtung ersten Temperatursensors 3 im Speicher abgelegt, da dessen Temperatur - im Gegensatz zum zweiten Temperatursensor 4 - mit Zunahme des Massenstroms stetig abnimmt. Im erkannten Fehlerfall wird aus dem Signal des in Strömungsrichtung ersten Temperatursensors 3 der Massenstrom m bestimmt. Hierdurch wird ein "Notbetrieb" ermöglicht. Ist jedoch dieser erste Temperatursensor 3 defekt, so verstärkt sich der Fehler. Ist der Heizer defekt, so kann ebenfalls kein korrektes Ergebnis für den Massenstrom ermittelt werden. Lediglich in dem Fall, in dem der zweite Temperatursensor 4 defekt ist, kann ein korrekter Massenstrom aus dem Speicher ausgelesen werden.

**Patentansprüche**

1. Verfahren zur Fehlererkennung eines Strömungssensors (1), der über zwei Temperatursensoren (3, 4) mit dazwischen liegendem Heizelement (2) verfügt, **dadurch gekennzeichnet, dass**
unter Referenzbedingungen der Strömungssensor (1) unterschiedlichen Massenströmen ausgesetzt wird und hierbei die Temperatur der beiden Temperatursensoren (3, 4) erfasst wird, wobei
aus diesen Temperaturen rechnerisch der Massenstrom ($\dddot{m}$) sowie ein Quotient ($V_{ref}(\dddot{m})$) der beiden Temperaturen ($T_1(\dddot{m})$, $T_2(\dddot{m})$) bestimmt und in einem Speicher als Referenzwerte gespeichert werden, wobei
im normalen Betrieb ebenfalls der Quotient $V(\dddot{m})$ der mittels der beiden Temperatursensoren (3, 4) gemessenen Temperaturen $T_1(\dddot{m})$, $T_2(\dddot{m})$ ermittelt wird und aus diesen gemessenen Temperaturen, $T_1(\dddot{m})$, $T_2(\dddot{m})$, ebenfalls der Massenstrom $\dddot{m}$ ermittelt wird und
in dem Fall, in dem der aktuell gemessene Quotient $V(\dddot{m})$ vom gespeicherten Quotienten $V_{ref}(\dddot{m})$ bei gleichem Massenstrom $\dddot{m}$ aus der entsprechenden Referenzmessung mehr als eine vorgegebene Toleranz abweicht, ein Fehlersignal ausgegeben wird.

2. Verfahren zur Fehlererkennung eines Strömungssensors nach Anspruch 1, **dadurch gekennzeichnet, dass** die Toleranz einen vorbestimmten Wert hat oder relativ zu mindestens einem Messwert ist.

3. Verfahren zur Fehlererkennung eines Strömungssensors nach einem der Ansprüche 1 oder 2, **dadurch gekennzeichnet, dass** bei der Ermittlung der Referenzwerte auch die Temperatur $T_1(\dddot{m})$ des Strömungsrichtung ersten Temperatursensors (3) im Speicher abgelegt wird und im erkannten Fehlerfall aus dem Signal des in Strömungsrichtung ersten Temperatursensors (3) und den im Speicher abgelegten Referenzwerten der Massenstrom $\dddot{m}$ bestimmt wird.

**Claims**

1. A method for recognising errors in a flow sensor (1) comprising two temperature sensors (3, 4) with an interposed heating element (2), **characterised in that**
the flow sensor (1) is under reference conditions exposed to different mass flows and in so doing acquires the temperature of the two temperature sensors (3, 4),

with these temperature values serving to determine by calculation the mass flow ($\dddot{m}$) as well as a quotient ($V_{ref}(\dddot{m})$) of the two temperatures ($T_1(\dddot{m})$, $T_2(\dddot{m})$), which are stored as reference values in a memory, and

in normal operation likewise such quotient $V(\dddot{m})$ of the temperatures $T_1(\dddot{m})$, $T_2(\dddot{m})$ measured by means of the two temperature sensors (3, 4) is determined and the temperatures $T_1(\dddot{m})$, $T_2(\dddot{m})$ thus measured serve to likewise determine the mass flow $\dddot{m}$ and, in the event that the currently measured quotient $V(\dddot{m})$ deviates by more than a preset tolerance from the stored quotient $V_{ref}(\dddot{m})$ obtained from the corresponding reference measurement at an equal volume of mass flow $\dddot{m}$ , an error signal is provided.

2. A method for recognising errors in a flow sensor as claimed in Claim 1, **characterised in that** the tolerance has a predetermined value or is relative to at least one measured value.

3. A method for recognising errors in a flow sensor as claimed in any of Claims 1 or 2 **characterised in that** in determining the reference values also the temperature $T_1(\dddot{m})$ of the first temperature sensor (3) in flow direction is stored in the memory and, in the event that an error is recognised, the mass flow $\dddot{m}$ is determined from the signal of the first temperature sensor (3) in flow direction and the reference values stored in the memory.

## Revendications

1. Procédé pour la détection d'erreurs d'un capteur de courant (1) qui dispose de deux capteurs de température (3, 4) avec un élément chauffant (2) situé entre eux, **caractérisé en ce que**

le capteur de courant (1) est soumis à différents courants massiques dans des conditions de référence et la température des deux capteurs de température (3, 4) est ce faisant détectée,

le courant massique ($m$) ainsi qu'un quotient ($V_{ref}(m)$) des deux températures ($T_1(m)$, $T_2(m)$) étant déterminés par calcul à partir de ces températures et mémorisés en tant que valeurs de référence dans une mémoire,

le quotient $V(m)$ des températures $T_1(m)$, $T_2(m)$ mesurées au moyen des deux capteurs de température (3, 4) étant également déterminé en fonctionnement normal et le courant massique $m$ étant également déterminé à partir de ces températures $T_1(m)$, $T_2(m)$ mesurées et

dans le cas où le quotient $V(m)$ actuellement mesuré s'écarte du quotient $V_{ref}(m)$ mémorisé, avec un courant massique $m$ identique provenant de la mesure de référence correspondante, d'une valeur supérieure à une tolérance prédéfinie, un signal d'erreur étant émis.

2. Procédé pour la détection d'erreurs d'un capteur de courant selon la revendication 1, **caractérisé en ce que** la tolérance a une valeur prédéterminée ou est relative à au moins une valeur mesurée.

3. Procédé pour la détection d'erreurs d'un capteur de courant selon l'une des revendications 1 ou 2, **caractérisé en ce que** lors de la détermination des valeurs de référence, la température $T_1(m)$ du premier capteur de température (3) dans le sens du courant est également mise en mémoire et en cas d'erreur détectée, le courant massique $m$ est déterminé à partir du signal du premier capteur de température (3) dans le sens du courant et des valeurs de référence mises en mémoire.

$$\dot{m}$$

$$\dot{Q} = U \cdot I$$

1

2

3

4

5

Fig. 1

$\dot{m}$

$\dot{Q} = U \cdot I$

1

3

2

4

5

Fig. 2

$T_2$

$T_2/T_1$

T2/T1

$T_1$

T

$T_{fluid}$

$\dot{m}$ [g/s]

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1207347 A
- DE 10129300 A1